(19) Europäisches Patentamt
European Patent Office
Office européen des brevets

(11) Veröffentlichungsnummer: **0 286 821 B1**

(12) **EUROPÄISCHE PATENTSCHRIFT**

(45) Veröffentlichungstag der Patentschrift: **22.04.92**

(51) Int. Cl.5: **B29C 51/00**, //B29K27:18

(21) Anmeldenummer: **88103456.5**

(22) Anmeldetag: **05.03.88**

# (54) Verfahren zur Herstellung eines Formkörpers aus einem Vorformling, der im wesentlichen aus polymerisierten Einheiten des Tetrafluorethylens besteht.

(30) Priorität: **11.03.87 DE 3707730**
**16.07.87 DE 3723489**

(43) Veröffentlichungstag der Anmeldung:
**19.10.88 Patentblatt 88/42**

(45) Bekanntmachung des Hinweises auf die Patenterteilung:
**22.04.92 Patentblatt 92/17**

(84) Benannte Vertragsstaaten:
**CH DE FR GB IT LI NL**

(56) Entgegenhaltungen:
**DE-A- 3 020 969**
**US-A- 4 129 618**
**US-A- 4 165 357**
**US-A- 4 510 300**

(73) Patentinhaber: **HOECHST AKTIENGESELL-SCHAFT**
**Postfach 80 03 20**
**W-6230 Frankfurt am Main 80(DE)**

(72) Erfinder: **Michel, Wolfgang**
**Hörndlwandweg 6**
**W-8269 Burgkirchen(DE)**
Erfinder: **Neumeier, Martin**
**Birkenweg 4**
**W-8261 Kastl(DE)**

**EP 0 286 821 B1**

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

## Beschreibung

Die Erfindung betrifft ein Verfahren gemäß Patentanspruch 1.

Es ist bekannt, einen Formkörper aus einem Vorformling, beispielsweise einer Folie, die im wesentlichen aus einem gut thermoplastischen Polymerisat besteht, dadurch herzustellen, daß der erwärmte Vorformling durch ein Druckgefälle in oder an eine feste Form gepreßt, anschließend abgekühlt und von der Form getrennt wird. Dieses häufig verwendete Formungsverfahren wurde bisher für Vorformlinge, die im wesentlichen aus polymerisierten Einheiten des Tetrafluorethylens bestehen, nur erheblich verändert angewandt, da solche Vorformlinge nach dem für thermoplastische Polymerisate entwickelten Verfahren nicht verarbeitet werden konnten.

So ist aus DE-AS 14 79 625 ein Verfahren bekannt, bei dem eine Folie aus einem Fluorkohlenwasserstoffpolymer auf 245 bis 330 °C erwärmt wird, wobei während des Verformens durch den senkrecht auf die Oberfläche der Folie aufgebrachten Druck gleichzeitig auf die außerhalb der Öffnung der Tiefziehform liegenden Kanten der Folie ein ein Nachfließen des noch nicht tiefgezogenen Teiles der Folie zur Öffnung der Tiefziehform hin wirkender Druck aufgebracht wird und das anschließende Abkühlen des Formlings bis auf eine Temperatur unterhalb etwa 38 °C erfolgt. Als Mittel zur Anwendung des Druckes wird vorzugsweise Siliconöl verwendet (Spalte 5, Zeilen 29 bis 33). Nach Abkühlung auf unter 38 °C wird der fertige Formling, während er noch in der Form anliegt, langsam wieder auf eine Temperatur erwärmt, die mindestens 55 °C über der späteren Gebrauchstemperatur,jedoch nicht wesentlich über 330 °C liegt (Spalte 5, Zeilen 16 bis 22). Oberhalb 330 °C gehen die polymeren Fluorkohlenwasserstoffe, insbesondere Polymere und Mischpolymere des Tetrafluorethylens, in einen amorphen Gelzustand über, in dem sie nicht in erheblichem Maße fließen und nur begrenzte Verformung ohne Gefahr des Reißens gestatten (Spalte 1, Zeilen 19 bis 37).

Dieses Verfahren gestattet offenbar die Herstellung von Formkörpern mit vergleichsweise befriedigendem Tiefziehverhältnis und mit Kanten, die einen kleinen Kantenradius aufweisen, es ist jedoch apparativ aufwendig und benötigt einen erheblichen Zeitaufwand für die Nachtemperung.

Aus DD 232 669-A1 ist ein weiteres Verfahren bekannt, bei dem eine Polytetrafluorethylen-Folie in einem Wärmeschrank über 327 °C erwärmt, in einer Vorrichtung gegen die Matrizenunterkanten dichtend gepreßt, mit Preßluft in die Matrize formschlüssig gedrückt, unter Gewährleistung eines Materialnachflusses abgekühlt und anschließend formstabil entnommen wird. Beim Formvorgang bildet sich ein Luftspalt, durch den die Folie während der Abkühlung an der Matrizenoberfläche und durch überströmende Druckluft nachfließt. Über ein erreichbares Tiefziehverhältnis und den Kantenradius des Formlings ist nichts ausgesagt. Nach dem Beispiel wird ein Formling ohne scharfe Kanten mit geringem Tiefziehverhältnis erzeugt.

Ausgehend von diesem Stand der Technik, hat sich die Erfindung die Aufgabe gestellt, die genannten Nachteile zu vermeiden, insbesondere ein Verfahren zu entwickeln, das einen vergleichsweise geringen apparativen Aufwand benötigt und mit dem aus einem Vorformling, der überwiegend polymerisierte Tetrafluorethyleneinheiten enthält, Formlinge mit gutem Verformungsverhältnis und geringen Kantenradien hergestellt werden können, die keiner Nachtemperung bedürfen.

Das neue Verfahren zur Herstellung eines Formkörpers aus mindestens einem Vorformling, der im wesentlichen aus einem Polymerisat besteht, das mindestens 98 Gew.-%, bezogen auf das Polymerisat, polymerisierte Einheiten des Tetrafluorethylens enthält, wobei durch ein Druckgefälle der erwärmte Vorformling in oder an eine feste, erwärmte Form gepreßt, anschließend abgekühlt und von der Form getrennt wird, ist dadurch gekennzeichnet, daß die feste Form und der Vorformling auf 330 bis 400 °C erwärmt werden und nach Erreichen einer in diesem Bereich liegenden Temperatur ein während der Verformung des Vorformlings langsam zunehmendes Druckgefälle angewendet wird, wobei die Zunahme des Druckgefälles höchstens 33 kPa/s beträgt und wobei während der Verformung und Abkühlung die Ränder des Vorformlings in ihrer ursprünglichen Lage festgehalten werden.

Das neue Verfahren ist geeignet zur Verformung von Vorformlingen verschiedener Art, wie zum Beispiel zylindrischen, einseitig geschlossenen Hohlkörpern, Folien- oder Platten-Abschnitten mit einer Wandstärke von etwa 20 bis etwa 6 000 µm. Vorzugsweise wird für das neue Verfahren ein Vorformling verwendet, der eine Wandstärke von 500 bis 3 000 µm aufweist. Bevorzugt wird als Vorformling mindestens ein Folien- oder Platten-Abschnitt verwendet.

Das Verfahren wird mit Vorteil mit einem Vorformling durchgeführt, der im wesentlichen aus einem Polymerisat besteht, das zu 98 Gew.-%, bezogen auf das Polymerisat, polymerisierte Einheiten des Tetrafluorethylens enthält. Vorzugsweise wird ein solcher Vorformling verwendet, der aus einem Polymerisat besteht, das 99 Gew.-% und insbesondere 99,5 Gew.-%, bezogen auf das Polymerisat, aus polymerisierten Einheiten des Tetrafluorethylens besteht. Die restlichen im Polymerisat vorhandenen polymerisierten Einheiten können aus einem oder mehreren mit Tetrafluorethylen copolymerisierbaren fluorierten Monomeren bestehen. Vorteilhaft enthält das Polymerisat, aus dem der Vorformling im wesentlichen besteht, neben polymerisierten Einheiten des Tetrafluorethylens 0,003 bis 0,5 Mol-%, bezogen auf das Polymerisat, polymerisierte Einheiten mindestens eines Monomeren der Formel $A\text{-}CF=CF_2$, worin A bedeutet: Trifluormethyl-, einen Perfluoralkoxi-Rest mit 1 bis 6 C-Atomen oder einen Rest mit folgender Formel:

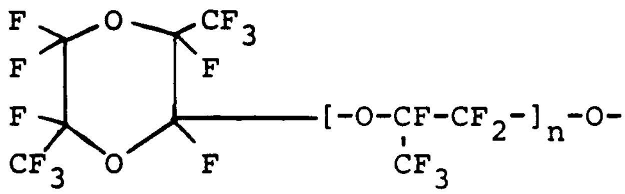

$n = 0$ bis 4

oder

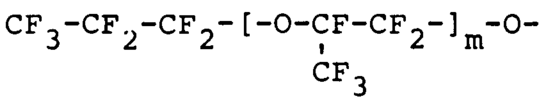

$m = 1$ bis 4.

In einer weiteren bevorzugten Ausführungsform des erfindungsgemäßen Verfahrens besteht der Vorformling im wesentlichen aus reinem Polytetrafluorethylen.

Neben dem Polymerisatanteil kann der Vorformling noch bis zu 30 Gew.-%, vorzugsweise bis zu 20 Gew.-%, feinteilige Füllstoffe, wie Glas, Kohle, Graphit, Bronze, Edelstahl, Keramik sowie Farbpigmente und Fluoreszenzstoffe enthalten.

Der Vorformling kann nach an sich bekannten Verfahren hergestellt werden, beispielsweise bei erhöhter Temperatur durch mechanisches oder isostatisches Pressen, durch Ram-Extrusion eines Schlauchabschnitts, der an einem Ende verschweißt wird, oder wenn der Vorformling ein Folienabschnitt ist durch Schälen eines Sinterblocks und entsprechendes Zuschneiden.

Die feste Form und der Vorformling werden auf 330 bis 400 °C erwärmt. Ist die Temperatur des Vorformlings niedriger als 330 °C oder höher als 400 °C, werden im zunehmenden Maße Schwierigkeiten durch Rißbildung beobachtet, wodurch, wenn überhaupt, nur noch geringe Verformungsverhältnisse erreicht werden. Vorzugsweise soll der Vorformling beim Beginn der Verformung eine Temperatur von 340 bis 360 °C haben.

Die Temperatur der Formoberfläche, mit der der Vorformling in Berührung kommt, kann von der Temperatur des Vorformlings etwas abweichen, sie sollte aber beim Beginn des Verformungsvorganges iber dem Kristallitschmelzpunkt des Vorformlings und unterhalb etwa 420 °C liegen. Ist die Temperatur der Formoberfläche zu hoch, tritt Lochbildung während des Verformungsvorgangs ein, liegt diese Temperatur unter dem Kristallitschmelzpunkt, werden Mikroporosität und Farbschwankungen im erzeugten Formling beobachtet. Vorteilhaft sollte die Temperaturdifferenz zwischen Formoberfläche und Vorformling beim Beginn des Verformungsvorganges höchstens ± 15 °C und insbesondere höchstens + 7 °C betragen.

Wenn der Vorformling seine höchste Temperatur, das heißt, die gewünschte Verarbeitungstemperatur erreicht hat, wird ein während der Verformung langsam zunehmendes Druckgefälle angewandt, durch das der erwärmte Vorformling in oder an die feste, erwärmte Form gepreßt wird. Die Zunahme dieses Druckgefälles während des Verformungsvorganges sollte höchstens 33 kPa/s betragen, da bei höherer Zunahme des Druckgefälles im allgemeinen der Vorformling aufreißt. Vorzugsweise wird mit einer Zunahme des Druckgefälles von 10 bis 1,5 kPa/s und insbesondere mit einer Zunahme des Druckgefälles von 6 bis 3 kPa/s gearbeitet. Das Druckgefälle ergibt sich aus dem Druck auf der Oberfläche des Vorformlings, die der Formoberfläche abgewendet ist, vermindert um den Druck auf der Oberfläche des Vorformlings, die der Formoberfläche zugewendet ist.

Das Druckgefälle kann während des Verformungsvorganges kontinuierlich oder in Stufen gesteigert werden. In jedem Fall sollte die Zeit vom Beginn der Anwendung eines Druckgefälles bis zum praktisch vollständigen Anliegen der Oberfläche des erwärmten Vorformlings an der Formoberfläche 180 s nicht übersteigen. Eine längere Zeit ist in der Regel nicht erforderlich, sie würde das Verfahren nur weniger wirtschaftlich machen und andere Nachteile mit sich bringen.

Nachdem die Oberfläche des Vorformlings sich praktisch vollständig an die Oberfläche der Form angelegt hat, werden unter Aufrechterhaltung des Druckgefälles Formling und Form bis auf mindestens 260 °C gekühlt, dann kann der aus dem Vorformling entstandene Formling der Form entnommen und für sich weiter abgekühlt werden, während die mit dem Formling in Kontakt gewesene Formoberfläche für einen neuen Formvorgang wieder auf eine Temperatur, die über dem Kristallitschmelzpunkt des zu verformenden Vorformlings liegt, aufgeheizt werden kann. Grundsätzlich kann der Formling auch bei einer Temperatur unter 260 °C der Form entnommen werden, jedoch ist die Anwendung einer tieferen Entformungstemperatur im allgemeinen nicht erforderlich. Die Abkühlung auf 260 °C oder auch eine darunterliegende Temperatur kann je nach den gewünschten Gebrauchseigenschaften des Formlings rasch oder langsam erfolgen.

Während der Verformung und Abkühlung werden die Ränder des Vorformlings in ihrer ursprünglichen Lage festgehalten, dies kann beispielsweise, wenn der Vorformling ein Folien- oder Platten-Abschnitt ist, mit einem Rahmen geschehen, mit dem die Folie beziehungsweise Platte auf die Ränder der Form mittels Klemmschrauben, Kniehebeln oder Federn aufgedrückt wird. Die Ränder eines zylindrischen, einseitig geschlossenen Vorformlings werden beispielsweise durch partielle Flächen einer geteilten Form, wie Flansche, oder durch konische, aufeinanderpassende Flächenteile von Form und Verschließeinheit, festgehalten.

Die den Vorformling formende Oberfläche der Form kann hohl oder erhaben ausgebildet sein. Sofern eine erhabene Form verwendet wird, ist bei deren Gestaltung zu berücksichtigen, daß der aus dem Vorformling erzeugte Formling bei der Abkühlung infolge natürlicher negativer Wärmeausdehnung schrumpft. Zweckmäßig werden die Seitenwände der formenden Oberflächen gleichmäßig durchgehend und in Formungsrichtung schwach konisch sich verjüngend ausgeführt.

Das Druckgefälle kann sowohl mit Gasen wie auch mit Flüssigkeiten erzeugt werden, vorzugsweise wird es mit Gas, insbesondere Luft, hergestellt. Hierbei kann beispielsweise der Druck auf der Seite des Vorformlings, die der formenden Oberfläche zugekehrt ist, durch stufenweises oder kontinuierliches langsames Evakuieren des Raums zwischen Vorformling und formender Oberfläche abgesenkt werden oder es wird auf der der formenden Oberfläche abgekehrten Seite des Vorformlings kontinuierlich oder in Stufen der Druck langsam gesteigert, wobei während des Formvorgangs die zwischen Vorformling und formender Oberfläche eingeschlossene Luft durch Öffnungen in der Form entweichen kann. Das zur vollständigen Ausformung mindestens notwendige Druckgefälle hängt von der Dicke des Vorformlings, seiner Zusammensetzung und der angewendeten Temperatur ab, es liegt in der Regel unter 100 kPa. Es ist deshalb zwar möglich, aber nicht erforderlich, ein höheres End-Druckgefälle als 100 kPa anzuwenden.

Die Erwärmung des Vorformlings und der Oberfläche der Form, die mit dem Vorformling in Kontakt kommt, kann auf verschiedene Weise erfolgen. Zweckmäßig können zum Beispiel Vorformling und Form in dem gleichen Raum, beispielsweise mit Heißluft, erwärmt werden. Es ist jedoch auch eine getrennte Erwärmung des Vorformlings, beispielsweise, wenn dieser eine Folie ist, mit Strahlern oder Heißluft, und der Form, beispielsweise mit einer erhitzten Flüssigkeit oder einer elektrischen Heizung,möglich.

Wenn der Vorformling eine Folie ist, kann das erfindungsgemäße Verfahren mit einer Vorverformung dieser Folie, beispielsweise durch einen auf etwa die Folientemperatur erwärmten Stempel, oder durch ein konstantes, nicht zur vollständigen Verformung der Folie ausreichendes Druckgefälle kombiniert werden. Das neue Verfahren kann auch mit zwei oder mehreren übereinandergelegten Folien oder zwei oder mehreren ineinandergesteckten zylindrischen, einseitig geschlossenen Hohlkörpern ausgeführt werden, wobei die Zusammensetzung der Folien beziehungsweise Hohlkörper vorteilhaft so gewählt wird, daß sie ohne störende thermische Schädigung während des Verfahrensablaufes miteinander verschweißen. Mindestens eine dieser Folien beziehungsweise Hohlkörper sollte die weiter oben angegebene, für das neue Verfahren günstige Zusammensetzung aufweisen. Eine weitere Folie beziehungsweise Hohlkörper kann aus einem bei 330 bis 400 °C tiefziehfähigem Metall oder einer Metallegierung, beispielsweise Aluminium oder einer Aluminiumlegierung bestehen. Zwischen der Metallfolie und der weiter oben angegebenen Folie, die mindestens 98 Gew.-% polymerisierte Einheiten des Tetrafluorethylens enthält, kann eine haftvermittelnde Zwischen-Folie oder -Schicht angeordnet sein.

Das erfindungsgemäße Verfahren ermöglicht es,Formkörper von geringer Dicke in vergleichsweise kurzer Zeit, mit für die meisten Anwendungsgebiete ausreichendem Restschrumpf und glatter Oberfläche herzustellen. Eine Nachbehandlung der Oberfläche des Formkörpers, wie sie bei durch Pressen hergestellten Formkörpern üblich ist, entfällt, ebenso ist ein Nachtempern nicht erforderlich. Das Verfahren ist apparativ wenig aufwendig und kann mit marktüblichen, mit vertretbaren Kosten umgebauten Geräten durchgeführt werden.

Nachfolgende Beispiele sollen die Erfindung näher erläutern:

Beispiel 1

Es wird eine Hohlform aus Metall verwendet, die einen quaderförmigen Hohlraum von 165 mm Länge, 165 mm Breite und 125 mm Tiefe enthält. Die äußeren Kanten dieses Hohlraums sind eben und geglättet, auf ihnen kann ein quadratischer Metallrahmen von 165 × 165 mm lichter Öffnung mittels Flügelmuttern und Druckfedern befestigt werden. An den Kanten zwischen Boden und Seitenwänden des Hohlraumes sind Öffnungen angebracht, die in eine zentrale Leitung münden. Diese Leitung ist mit einer Druckmessung und über ein Ventil mit einer Vakuumpumpe verbunden.

Die zur Verformung vorgesehene Folie ist 2 500 µm dick und enthält 0,044 Mol-%, bezogen auf den Polymeranteil der Folie, polymerisierte Einheiten des Perfluorpropylperfluorvinyl-ethers, der Rest sind polymerisierte Einheiten des Tetrafluorethylens. Die Folie besteht ausschließlich aus dem Polymeren.

Zunächst wird die Hohlform in einem Ofen auf 350 °C erwärmt, dann vermittels des Metallrahmens ein entsprechend zugeschnittenes Stück der beschriebenen Folie über der Öffnung des Hohlraums an dessen äußeren Kanten dichtschließend angebracht. Die mit der Folie versehene Hohlform wird nun erneut im Ofen erwärmt, bis sowohl Folie als auch die Hohlform über einige Minuten konstant eine Temperatur von 360 °C aufweisen. Nun wird das Ventil zur Vakuumpumpe langsam geöffnet, so daß das Druckgefälle zwischen den beiden Folienseiten mit einer Geschwindigkeit von 3,5 kPa/s bis zu einem endgültigen Druckgefälle von 95 kPa zunimmt. Nun wird die Hohlorm mit dem Formling unter Aufrechterhaltung des Druckgefälles aus dem Ofen genommen, mit Druckluft auf 120 °C abgekühlt, die Flügelmuttern geöffnet und der Formling der Form entnommen. Er ist einwandfrei ausgeformt, der Kantenradius beträgt 6 mm. Bei Abkühlung auf 22 °C ändert sich der Formling nicht mehr.

Beispiel 2

Es wird eine Hohlform aus Metall verwendet, die einen zylindrischen Hohlraum von 100 mm Durchmesser und 50 mm Tiefe enthält. Die äußeren Kanten dieses Hohlraums sind eben und geglättet, auf ihnen kann ein ringförmiger Rahmen mit 100 mm lichtem Innendurchmesser mittels Flügelmuttern und Druckfedern befestigt werden. An der kreisförmigen Kante zwischen der Zylinderwand und dem Boden des Hohlraums sind gleichmäßig verteilt Öffnungen angebracht, die in eine zentrale Leitung münden. Diese Leitung ist mit einer Druckmessung und über ein Ventil mit einer Vakuumpumpe verbunden.

Die zur Verformung vorgesehene Folie ist 1 000 µm dick und besteht ausschließlich aus Polytetrafluorethylen.

Es wird verfahren, wie im Beispiel 1 beschrieben jedoch wird die Zunahme des Druckgefälles auf 4,6 kPa/s eingestellt. Nach Erreichen des endgültigen Druckgefälles von 92 kPa wird die Hohlform mit dem Formling unter Aufrechterhaltung des Druckgefälles aus dem Ofen genommen, mit Druckluft auf 200 °C abgekühlt, die Flügelmuttern geöffnet und der Formling der Hohlform entnommen. Er ist einwandfrei ausgeformt, der Kantenradius beträgt 4 mm. Bei Abkühlung auf 22 °C ändert sich der Formling nicht mehr. Der Formling wird nun eine Stunde auf 260 °C erwärmt, er zeigt hierbei einen Schrumpf (Schwund) von 1,77 %.

Beispiel 3

Es wird analog Beispiel 2 unter Verwendung der selben Hohlform und den gleichen Versuchsbedingungen gearbeitet mit folgenden Ausnahmen:
Die zur Verformung vorgesehene Folie enthält 0,044 Mol-%, bezogen auf den Polymeranteil der Folie, polymerisierte Einheiten des Perfluorpropyl-perfluorvinyl-ethers, der Rest sind polymerisierte Einheiten des Tetrafluorethylens. Die Folie besteht ausschließlich aus dem Polymeren und hat, wie im Beispiel 2, eine Dicke von 1 000 µm.

Die Erwärmung der mit Folie versehenen Hohlform erfolgt im Ofen in drei verschiedenen nacheinander durchgeführten Versuchen auf 330, 340 und 360 °C, wobei jedesmal unter Aufrechterhaltung des Druckgefälles auf 200 °C abgekühlt und dann der Formling aus der Hohlform genommen wird.

Alle drei bei verschiedenen Temperaturen erzeugten Formlinge sind gut ausgeformt und haben einen Kantenradius von 4 mm. Der bei 330 °C hergestellte Formling ist jedoch gegenüber dem bei 340 und 360 °C hergestellten aufgrund einer offensichtlich stärker schwankenden Wandstärkenverteilung weniger stabil.

Vergleichsversuch

Es wird gearbeitet wie im Beispiel 3 beschrieben, jedoch wird die Hohlform zunächst im Ofen auf 280

°C erwärmt, dann mit Folie versehen und die Hohlform mit der Folie im Ofen erwärmt bis Form und Folie über einige Minuten konstant eine Temperatur von 290 °C aufweisen. Nun wird durch Öffnen des Ventils zur Vakuumpumpe ein Druckgefälle von 92 kPa erzeugt. Die Folie verändert hierbei nur geringfügig ihre Form, es tritt praktisch keine Ausformung ein.

Beispiel 4

Es wird eine Hohlform aus Metall verwendet, die aus zwei Halbschalen mit Flanschen besteht, die dichtschließend aufeinander gepreßt werden können. Der Hohlraum im Inneren der Form hat die Gestalt einer weitgehend zylindrischen Flasche mit sich nach außen konisch erweiterndem Hals. In die konischen Halsflächen paßt ein Metallstempel mit einer Bohrung in der Mitte, die mit einer Druckluftleitung mit Regelventil in Verbindung steht. Die Innenmaße der Hohlform betragen 68 mm Durchmesser und (einschließlich Flaschenhals) 110 mm Höhe. Der kleinste Durchmesser des Flaschenhalses beträgt 38 mm. Am äußeren Rand des Flaschenbodens ist die Form in gleichmäßigen Abständen mehrfach mit kleinem Durchmesser durchbohrt, um ein Entweichen der eingeschlossenen Luft während des Verformungsvorganges zu ermöglichen.

Auf einer Drehbank wird aus einem Vollzylinder von 38 mm Durchmesser, der aus einem gesinterten Polymeren besteht, das neben polymerisierten Einheiten des Tetrafluorethylens 0,044 Mol-%, bezogen auf das Polymere, polymerisierte Einheiten des Perfluorpropylperfluorvinylethers enthält, ein Vorformling in Gestalt eines einseitig geschlossenen Hohlzylinders,mit einer Wandstärke von 2 000 µm und einer Länge von 110 mm hergestellt. Dieser Vorformling wird in die Hohlform aus Metall gebracht und mit seinem offenen Ende im Hals mit den konischen Flächen des durchbohrten Metallstempels dichtschließend eingeklemmt.

Form und Vorformling werden nun während 1 Stunde in einem Sinterofen auf 360 °C (Innenraum-Temperatur des Ofens) erwärmt und anschließend durch Druckluft mit einer Geschwindigkeit von 5 kPa/s bis zu einem endgültigen Druckgefälle von 200 kPa verformt. Nun wird die Hohlform mit dem Formling unter Aufrechterhaltung des Druckgefälles aus dem Ofen genommen, mit Wasser von 18 °C während 10 min gekühlt und der Formling der Form entnommen. Es wird eine einwandfrei ausgeformte Flasche mit einer gleichmäßigen Wandstärke von 1 000 µm ± 50 µm und am Hals einer zum Flaschenkörper hin abnehmenden Wandstärke von durchschnittlich 1 500 µm erhalten, die eine schöne, völlig glatte Oberfläche aufweist. Diese Flasche wird während 1 h auf 270 °C erwärmt und zeigt dabei einen Schrumpf von 2,25 %.

**Patentansprüche**

**1.** Verfahren zur Herstellung eines Formkörpers aus mindestens einem Vorformling, der im wesentlichen aus einem Polymerisat besteht, das mindestens 98 Gew.-%, bezogen auf das Polymerisat, polymerisierte Einheiten des Tetrafluorethylens enthält, wobei durch ein Druckgefälle der erwärmte Vorformling in oder an eine feste, erwärmte Form gepreßt, anschließend abgekühlt und von der Form getrennt wird, dadurch gekennzeichnet, daß die feste Form und der Vorformling auf 330 bis 400 °C erwärmt werden und nach Erreichen einer in diesem Bereich liegenden Temperatur ein während der Verformung des Vorformlings langsam zunehmendes Druckgefälle angewendet wird, wobei die Zunahme des Druckgefälles höchstens 33 kPa/s beträgt und wobei während der Verformung und Abkühlung die Ränder des Vorformlings in ihrer ursprünglichen Lage festgehalten werden.

**2.** Verfahren nach Anspruch 1, dadurch gekennzeichnet, daß die Zunahme des Druckgefälles während der Verformung des Vorformlings 10 bis 1,5 kPa/s beträgt.

**3.** Verfahren nach Anspruch 1 oder 2, dadurch gekennzeichnet, daß die Temperatur des Vorformlings beim Beginn der Verformung 340 bis 360 °C beträgt.

**4.** Verfahren nach einem oder mehreren der Ansprüche 1 bis 3, dadurch gekennzeichnet, daß die Formoberfläche mindestens die Temperatur des Kristallitschmelzpunktes des Vorformlings hat und die Temperaturdifferenz zwischen Formoberfläche und Vorformling beim Beginn des Verformungsvorganges höchstens ± 15 °C beträgt.

**5.** Verfahren nach einem oder mehreren der Ansprüche 1 bis 4, dadurch gekennzeichnet, daß der Vorformling vor der Verformung eine Wandstärke von 500 bis 3 000 µm aufweist.

6. Verfahren nach einem oder mehreren der Ansprüche 1 bis 5, dadurch gekennzeichnet, daß der Vorformling im wesentlichen aus einem Polymerisat besteht, das neben polymerisierten Einheiten des Tetrafluorethylens 0,003 bis 0,5 Mol-%, bezogen auf das Polymerisat, polymerisierte Einheiten mindestens eines Monomeren der Formel $A\text{-}CF=CF_2$ enthält, worin A bedeutet: Trifluormethyl-, einen Perfluoralkoxi-Rest mit 1 bis 6 C-Atomen oder einen Rest mit folgender Formel:

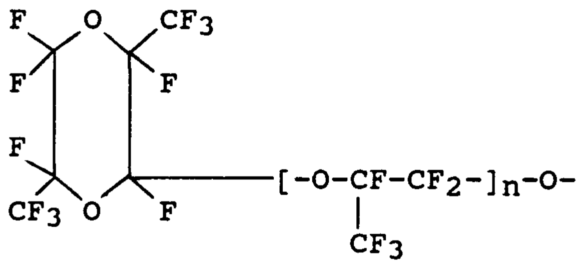

n = 0 bis 4

oder

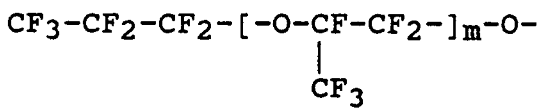

m = 1 bis 4.

## Claims

1. A process for the production of a moulding from at least one preform composed essentially of a polymer containing at least 98 % by weight, relative to the polymer, of polymerized units of tetrafluoroethylene, in which process the heated preform is pressed by means of a pressure difference into or onto a rigid, heated mould and is then cooled and separated from the mould, characterised by heating the rigid mould and the preform to 330 to 400 °C and, when a temperature within this range has been reached, applying a pressure difference which increases slowly during the shaping, whereby the increase being not more than 33 kPa/s, and whereby the edges of the preform being firmly held in their original position during shaping and cooling.

2. The process as claimed in claim 1, characterised in that the increase in the pressure difference during the shaping of the preform is 10 to 1.5 kPa/s.

3. The process as claimed in claim 1 or 2, characterised in that the temperature of the preform at the start of shaping is 340 to 360 °C.

4. The process as claimed in one or more of claims 1 to 3, characterised in that the surface of the mould has at least the same temperature as the crystallite melting point of the preform, and the temperature difference between the mould surface and the preform at the start of the shaping process is not more than ±15 °C.

5. The process as claimed in one or more of claims 1 to 4, characterised in that the preform has a wall thickness of 500 to 3,000 µm before being shaped.

6. The process as claimed in one or more of claims 1 to 5, wherein the preform is composed essentially of a polymer which, in addition to polymerized units of tetrafluoroethylene, contains 0.003 to 0.5 mol %, relative to the polymer, of polymerized units of at least one monomer of the formula $A\text{-}CF=CF_2$ in which A denotes: trifluoromethyl, a perfluoroalkoxy radical having 1 to 6 carbon atoms or a radical having the following formula:

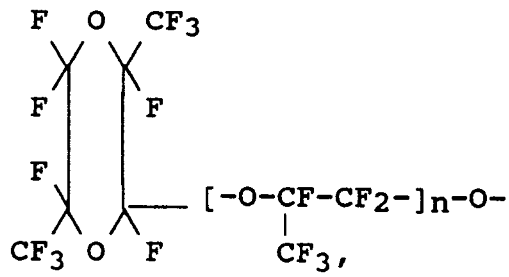

n = 0 to 4

or

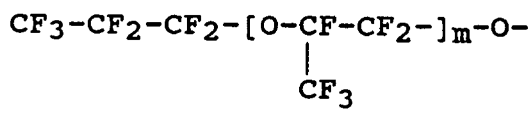

m = 1 to 4.

## Revendications

1. Procédé de fabrication d'un objet moulé à partir d'au moins une préforme ou ébauche essentiellement constituée d'un polymère d'au moins 98 % en poids de motifs polymérisés de tétrafluoréthylène, procédé dans lequel l'ébauche chauffée est pressée par une baisse de pression dans ou contre un moule solide chauffé puis elle est refroidie et retirée du moule, procéd caractérisé en ce que l'on porte le moule et l'ébauche à une température de 330 à 400 ° C et on applique alors une baisse de pression croissant lentement au cours du façonnage, accroissement qui ne doit pas dépasser 33 kPa/s, les bords de l'ébauche étant maintenus dans leur état initial au cours du façonnage et du refroidissement.

2. Procédé selon la revendication 1, caractérisé en ce que l'accroissement de la baisse de pression pendant le façonnage de l'ébauche est compris entre 10 et 1,5 kPa/s.

3. Procédé selon la revendication 1 ou 2, caractérisé en ce que la température d'ébauche est de 340 à 360 ° C au début du façonnage.

4. Procédé selon une ou plusieurs des revendications 1 à 3, caractérisé en ce que la surface du moule est à une température au moins égale au point de fusion des cristallites de l'ébauche et en ce que la différence des températures entre la surface du moule et l'ébauche au début du façonnage est au maximum ± 15 ° C.

5. Procédé selon une ou plusieurs des revendications 1 à 4, caractérisé en ce que avant le façonnage l'épaisseur de paroi de l'ébauche est de 500 à 3000 $\mu$m.

6. Procédé selon une ou plusieurs des revendications 1 à 5, caractérisé en ce que l'ébauche est essentiellement constituée d'un polymère comportant, en plus des motifs de tétrafluoréthylène, de 0, 003 à 0,5 Mol-%, par rapport au polymère, de motifs polymérisés d'un ou de plusieurs monomères de formule $A-CF=CF_2$, A désignant le groupe trifluorométhyle, un radical perfluoralcoxy en $C_1$ à $C_6$ ou un radical de formule:

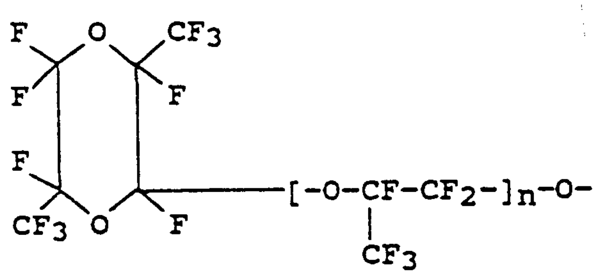

avec n = 0 à 4

ou

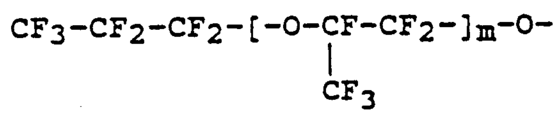

avec n = 1 à 4